# EUROPEAN PATENT APPLICATION

(11) **EP 4 350 602 A1**
(43) Date of publication of application: **10.04.2024**
(21) Application number: 22816168.3
(22) Date of filing: 01.06.2022
(51) Int. Cl.: G06Q 50/20

(54) **DEVICE, METHOD, AND PROGRAM FOR SUPPORTING CONTINUOUS ACTION WITHIN PREDETERMINED PERIOD**

(30) Priority: 01.06.2021 JP 2021092029; 26.01.2022 JP 2022010126
(71) Applicant: Wizwe Corporation, Tokyo 105-0001 (JP)
(72) Inventor: MORITANI, Kohei, Tokyo 102-0083 (JP); MIKAWA, Masahiro, Tokyo 102-0083 (JP); IWAI, Kenji, Tokyo 102-0083 (JP); SHINJO, Shoko, Tokyo 102-0083 (JP); IWATSUKI, Kazusa, Tokyo 102-0083 (JP); ISHIZU, Atsuhiro, Tokyo 102-0083 (JP); TANNO, Hiroaki, Tokyo 102-0083 (JP)
(74) Representative: Marks & Clerk LLP
(86) International application number: PCT/JP2022/022389
(87) International publication number: WO 2022/255423

(57) **Abstract**

In a method for supporting a continuous action, the efficiency of support for each actor is increased. First, goal setting information for learning, which is the object of support, is received from the supporter terminal 130 (S201). Next, the learning contents is transmitted to the first learner terminal 111 (S202) and an input regarding the learning contents is received from the first learner terminal 111 (S203). The same is done for the second learner (S204, S205). Next, the supporting apparatus 100 transmits a record acquisition request to the storage apparatus 120 to acquire records of learning results (S206) and receives the records (S207). Based on the acquired records, the supporting apparatus 100 calculates, for each learner, the rate of progress against the cumulative value of the values of the goal per unit period. The apparatus 100 then determines the type of support for each of the actors according to which segment the rate of progress falls in (S208).

## Description

### TECHNICAL FIELD

The present invention relates to an apparatus and method for supporting a continuous action within a predetermined period of time and a program therefor.

### BACKGROUND ART

In private schools or corporate trainings, learners are engaged in various types of learning, including language learning. However, it is not easy for learners to finish their studies, and many learners become frustrated.

Therefore, support may be provided to encourage continued learning. Such support can be provided by assigning an advising person to each learner during or before and after the lesson.

### SUMMARY OF INVENTION

### TECHNICAL PROBLEM

However, such individualized support is of course possible only in some high-end schools or trainings because it leads to a significant increase in costs, and the reality is that many learners fail to make learning a habit.

This problem of lack of ease of habituation is not limited to learning, but exists for a variety of actions that require continuity in order to achieve desired results. For example, but not limited to, actions related to health care such as exercise to maintain or improve health, actions related to sales activities such as making phone calls to potential customers, and many others.

The present invention was made in view of the problem, and its objective is to increase the efficiency of support for each actor in an apparatus or method for a supporting continuous action, or a program therefor.

### SOLUTION TO PROBLEM

To achieve the objective, the first aspect of the present invention is a method for supporting a continuous action within a predetermined period of time, comprising: acquiring records from a storage apparatus storing results of actions by multiple actors; based on the records, for each actor, calculating a progress rate against a cumulative value of values of goals per unit period within the predetermined period; for each actor, determining a type of support depending on which range within a set of ranges the progress rate falls in, wherein the set of ranges include a first range including 100%, a second range less than, or less than or equal to the first range, and a third range greater than, or greater than or equal to the first range.

The second aspect of the present invention is the method of the first aspect, wherein the set of ranges includes 0%.

The third aspect of the present invention is the method of the first aspect, the set of ranges includes a fourth range greater than or equal to 0%, or greater than or equal to 1%, and less than, or less than or equal to the second range.

The fourth aspect of the present invention is the method of any one of the first to third aspects, wherein each range included in the set of ranges is rounded up to the nearest 1%.

The fifth aspect of the present invention is the method of any one of the first to fourth aspects, wherein the determination is performed further depending on elapsed periods within the predetermined period.

The sixth aspect of the present invention is the method of any one of the first to fifth aspects, wherein support determined for an actor whose rate of progress falls in the third range is a transmission of a message based on a prepared template.

The seventh aspect of the present invention is the method of the sixth aspect, wherein the message is in image, video or voice format.

The eighth aspect of the present invention is the method of any one of the first to seventh aspects, further comprising a step of determining call as support for an actor whose progress rate is 0% after 1 unit, 2 units, or 3 units of the unit period of the predetermined period has elapsed to notify a result of the determination to a supporter terminal used by a supporter who performs support.

The nineth aspect of the present invention is the method of any one of the first to seventh aspects, further comprising a step of determining message transmission as support for an actor who has not achieved the goal per unit period continuously for 2 units within the predetermined period and whose progress rate falls within the first range or the third range to notify a result of the determination to a supporter terminal used by a supporter who performs support.

The tenth aspect of the present invention is the method of any one of the first to the nineth aspects, further comprising steps of sending a goal setting notification to each actor terminal used by each of the multiple actors to encourage setting of a goal for each unit period within the predetermined period; and receiving goal setting information for setting a goal for each unit period within the predetermined period from the actor terminal.

The eleventh aspect of the present invention is the method of any one of the first to the tenth aspects, further comprising a step of generating a team including multiple actors who meet a predetermined selection criterion.

The twelfth aspect of the present invention is the method of the eleventh aspect, wherein the selection criterion is that a rate of progress falls in a first range or a third range above the first range.

The thirteenth aspect of the present invention is a program for causing a computer to perform a method for supporting a continuous action within a predetermined period of time, the method comprising: acquiring records from a storage apparatus storing results of actions by multiple actors; based on the records, for each actor, calculating a progress rate against a cumulative value of values of goal per unit period within the predetermined period; for each actor, determining a type of support depending on which range within a set of ranges the progress rate falls in, wherein the set of ranges include a first range including 100%, a second range less than, or less than or equal to the first range, and a third range greater than, or greater than or equal to the first range.

The fourteenth aspect of the present invention is an apparatus for supporting a continuous action within a predetermined period of time, configured to: acquire records from a storage apparatus storing results of actions by multiple actors; based on the records, for each actor, calculate a progress rate against a cumulative value of values of goal per unit period within the predetermined period; for each actor, determine a type of support depending on which range within a set of ranges the progress rate falls in, wherein the set of ranges include a first range including 100%, a second range less than, or less than or equal to the first range, and a third range greater than, or greater than or equal to the first range.

The fifteenth aspect of the present invention is a method for supporting a continuous action within a predetermined period of time, comprising: acquiring records from a storage apparatus storing results of actions by multiple actors; based on the records, for each actor, calculating a progress rate against a set value of a goal per unit period within the predetermined period; for each actor, determining a type of support depending on which range within a set of ranges the progress rate falls in, wherein the set of ranges include a first range including 100%, a second range less than, or less than or equal to the first range, and a third range greater than, or greater than or equal to the first range.

The sixteenth aspect of the present invention is the method of the fifteenth aspect, wherein support determined for an actor whose rates of progress per unit period fall in the third range continuously for 2 or 3 units is a transmission of a message based on a prepared template.

The seventeenth aspect of the present invention is the method of the fifteenth aspect, further comprising a step of determining call as support for an actor whose progress rate is 0% after 1 unit, 2 units, or 3 units of a unit period of the predetermined period has elapsed to notify a result of the determination to a supporter terminal used by a supporter who performs support.

The eighteenth aspect of the present invention is the method of the fifteenth aspect, further comprising a step of determining message transmission as support for an actor whose progress rates fall in the second range continuously for 2 units within the predetermined period to notify a result of the determination to a supporter terminal used by a supporter who performs support.

The nineteenth aspect of the present invention is a program for causing a computer to perform a method for supporting a continuous action within a predetermined period of time, the method comprising: acquiring records from a storage apparatus storing results of actions by multiple actors; based on the records, for each actor, calculating a progress rate against a set value of a goal per unit period within the predetermined period; for each actor, determining a type of support depending on which range within a set of ranges the progress rate falls in, wherein the set of ranges include a first range including 100%, a second range less than, or less than or equal to the first range, and a third range greater than, or greater than or equal to the first range.

The twentieth aspect of the present invention is an apparatus for supporting a continuous action within a predetermined period of time, configured to: acquire records from a storage apparatus storing results of actions by multiple actors; based on the records, for each actor, calculate a progress rate against a set value of a goal per unit period within the predetermined period; for each actor, determine a type of support depending on which range within a set of ranges the progress rate falls in, wherein the set of ranges include a first range including 100%, a second range less than, or less than or equal to the first range, and a third range greater than, or greater than or equal to the first range.

According to an aspect of the present invention, based on records concerning action results, the rate of progress against a cumulative value of predetermined goals per unit period within a predetermined period is calculated for each actor, and the type of support for each actor is determined according to which segment the rate of progress falls in. This allows the supporter to select which actors to intervene with their time, thereby increasing the efficiency of the support.

### BRIEF DESCRIPTION OF DRAWINGS

FIG. 1 shows an apparatus according to one embodiment of the present invention.
FIG. 2 shows a flow chart of a method according to one embodiment of the present invention.
FIG. 3 shows an example of an input screen for goal setting information according to one embodiment of the present invention.
FIG. 4 shows examples of progress of actors when various types of support are provided when the action is learning.
FIG. 5 shows an example of the subsequent learning progress of a learner who initially achieved a high rate of progress.

### DESCRIPTION OF EMBODIMENTS

The embodiments of the present invention are described in detail below with reference to the drawings. Although the present invention is described below primarily in the example of learning, each aspect of the present invention described in the example of learning is applicable to a variety of actions.

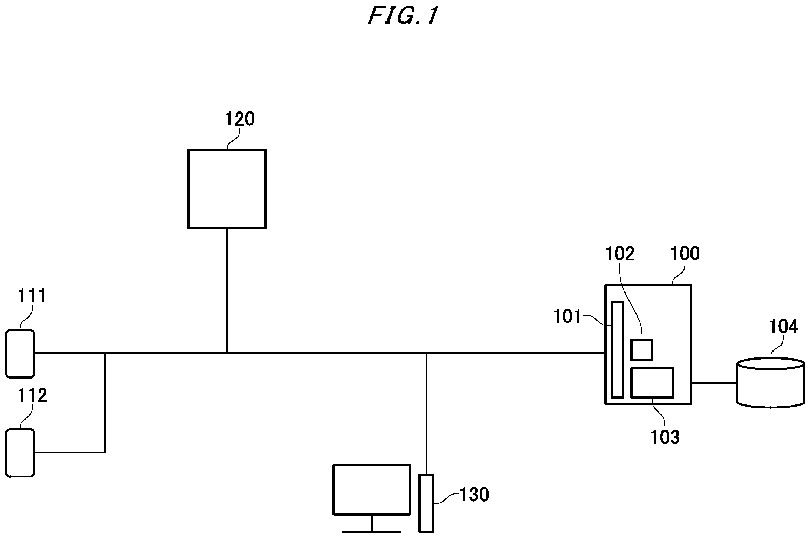

FIG. 1 shows an apparatus according to one embodiment of the present invention. The apparatus 100 communicates via an IP network such as the Internet with a first learner terminal 111 used by a first learner, a second learner terminal 112 used by a second learner, a storage apparatus 120 that stores learning results by multiple learners, and a supporter terminal 130 used by a supporter providing support. The apparatus 100 calculates the learning progress rate for each learner based on the learning results obtained from the storage apparatus 120 and provides support to each actor according to the progress rate. For simplicity, the following description will focus on the first learner terminal 111, which may be described as a learner terminal 111. Here, the term "learning result" can be expressed more generally as "action result."

The apparatus 100 comprises a communication unit 101, such as a communication interface, a processing unit 102, such as a processor or CPU, and a storage unit 103 including a storage device or storage medium, such as a memory, hard disk, etc., and can be configured by executing a program to perform each process. The apparatus 100 may include one or more apparatus, computers or servers. The program may include one or more programs, and may be stored on a computer-readable storage medium to form a nontransitory program product. The program may be stored in a storage unit 103 or in a storage apparatus or a storage medium such as a database 104 accessible from the apparatus 100 via an IP network, and may be executed by the processing unit 102. The data described below as being stored in the storage unit 103 may be stored in the database 104 and vice versa.

If the storage apparatus 120 is a server that provides a learning service for conducting some kind of learning online, the contents that the learner has learned on the learning service using the learner terminal 111 may be stored. The learning service can be used by displaying the learning contents on the display screen of the learner terminal 111 on a web browser or on an application installed on the learner terminal 111. For example, in learning English grammar, if a lesson includes 20 grammar questions and the learner inputs answers to all the questions, the inputs are sent from the learner terminal 111 to the recording device 120 and stored as learning contents on the storage apparatus 120. The input may be transmitted to the storage apparatus 120 after each input to each question is made.

Learning results may be stored in the storage apparatus 120 by having the learner send some learning results to the storage apparatus 120 using the learner terminal 111. The learning results can be input from the input screen displayed on the display screen of the learner terminal 110 on a web browser by sending input screen display information, for displaying a screen for inputting learning results, from the storage apparatus 120 to the learner terminal 111 as an HTML format file, for example, or by running an application installed on the learner terminal 110 and inputting the learning results from the input screen displayed on the application. In the case of English grammar learning, the learner can input the result of completing a lesson. However, from the standpoint of data reliability, it is preferable for the storage apparatus 120 to generate and store the learning result based on the input received from the learner regarding the contents of the learning, if the input meets certain conditions, instead of the learner directly inputting the learning result. In the English grammar learning example described above, the storage apparatus 120 may generate a learning result indicating that one lesson has been completed on the condition that the inputs of answers to the 20 questions are correct by a predetermined percentage or more.

If the learning contents are accompanied by an instructor, the instructor may input the learning result on the instructor terminal (not shown) used by the instructor, and the input may be transmitted from the instructor terminal to the storage apparatus 120. When the instructor performs the input, direct input of the learning result is reliable.

In addition to the end of the lesson, the learning result may include the fact that the lesson was started or that the student attended the lesson with the instructor. Alternatively, the storage apparatus 120 receives the lesson start or lesson attendance as the learning contents, and stores the learning result of lesson completion on the condition that additional learning contents are received, such as that the lesson has ended, a predetermined time has passed, or the lesson was not stopped.

Although how the action is performed is itself arbitrary as long as the result of the action is finally stored in the storage apparatus 120, the action to which the present invention can be applied is of a nature that allows the action to exceed the goal within a predetermined period of time. As an example, if a student learns 500 words in a study to learn 450 English words in 3 months, the student has exceeded the goal within the predetermined period of time. It can be a monthly period such as 3 months, 4 months, 5 months, or 6 months, or a weekly period such as 8, 16, 18, or 20 weeks, but it is preferable to use a period of 2 months or 8 weeks or longer. Such as attending 24 times where the goal is to attend 20 fitness classes in 2 months, or making 440 calls where the goal is to call 400 potential customers in a goal to call 400 potential customers in a predetermined period of 4 months are examples where the present invention can be applied. The present invention covers actions where a predetermined period is divided by a unit period and the results of actions per unit period can be stored. As described below, by accumulating the action results per unit period as data, support based on quantitative analysis can be provided. This does not preclude storing action results other than action results per unit period.

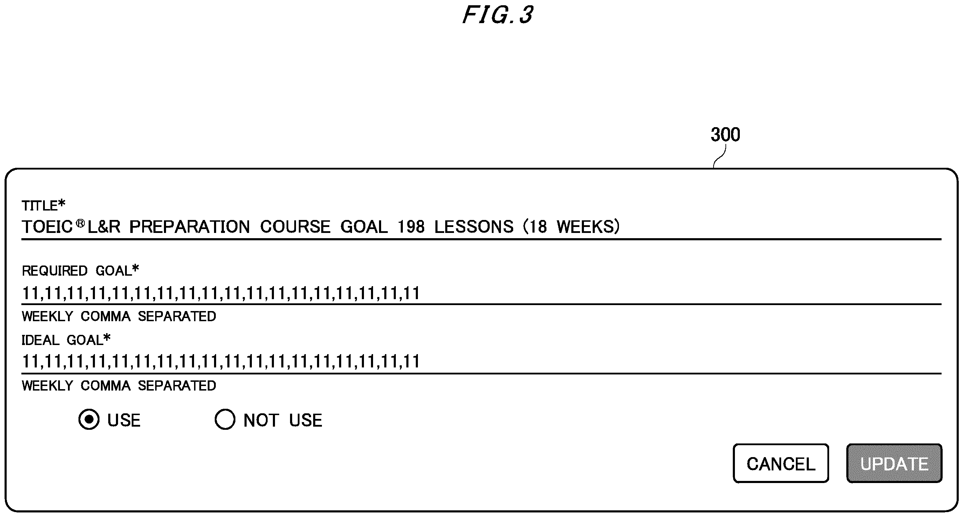

First, goal setting information for the study that is the subject of the support is received from the supporter terminal 130 used by the supporter who provides support (S201). FIG. 3 shows an example of an input screen for goal setting information. The input screen 300 is for a study where TOEIC (registered trademark) is supported, and the goals for respective weeks are entered as "11, 11, 11, 11, 11, 11, 11, 11, 11, 11, 11, 11, 11, 11, 11, 11, 11, 11, 11, 11, 11, 11, 11, 11, 11, 11, 11" separated by commas, for a study spanning 18 weeks with one week as the unit period. This goal is to complete 198 lessons in 18 weeks. If the study starts in the middle of the week, for example, the goals in the first and last weeks may be prorated according to the number of days. In addition, although the example in FIG. 3 shows equal goals for each week, the goals may be different for each week.

In addition to a case where the supporter who actually provides support inputs the goal setting information, there may be a case where another person of the company providing the support service inputs the information, or where the company providing the learning service to the learner is the company using the support service and the person of the company using the service inputs the information. In addition, goal setting can be performed for each learner or for a group including multiple learners by associating each with an appropriate identifier.

There is a correlation between the state of the learner prior to learning and the eventual achievement of goals, and increasing interest in learning prior to a predetermined period of time in which learning is to take place believed to has an impact. Prior to the predetermined period, a goal setting notification may be sent from the supporting apparatus 100 or the supporter terminal 130 to the learner terminal 111 which encourages the learner to set goals, to cause the goal setting information including goals input at the learner terminal 111 by the learner or a person (such as a parent) personally involved with the learner to be sent from the learner terminal 111 to the supporting apparatus 100. In this way, the learner's interest in learning can be increased. There is a correlation between the state of the person of the user company prior to learning and the eventual achievement of goals, and increasing the motivation for support prior to the predetermined period of time in which the learning is to take place is believed to have an impact. By sending a notification from the supporting apparatus 100 to the terminal (not shown) of the person of the user company to encourage involvement in the learner's goal achievement before the predetermined period, the person can be motivated to support the learner.

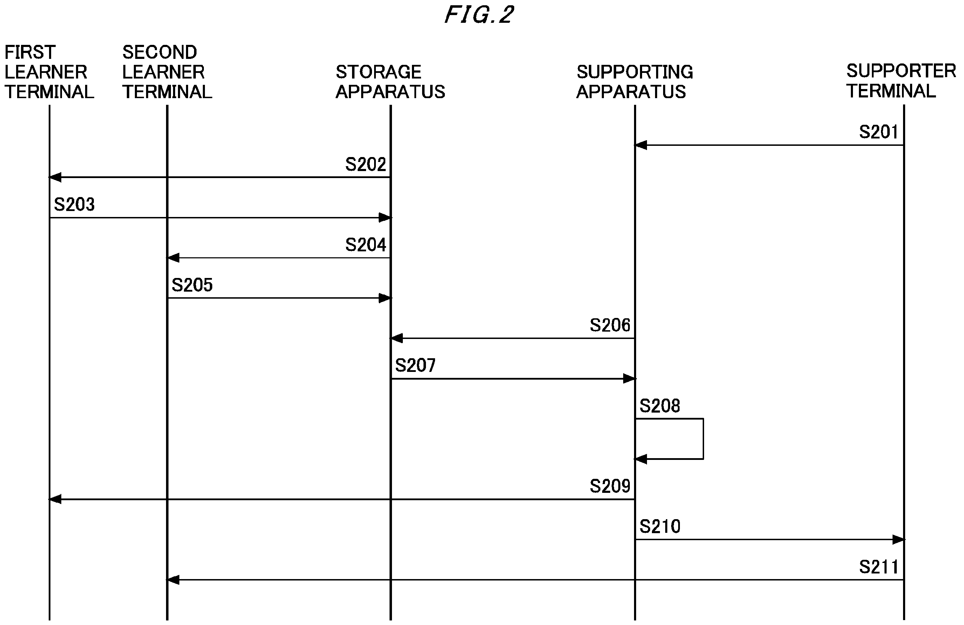

Next, in this example, the storage apparatus 120 is a server that provides a learning service online, transmits learning contents to the first learner terminal 111 (S202) and receives inputs from the first learner terminal 111 regarding the learning contents (S203). When the inputs meet predetermined conditions, one learning session is completed, and the number of learning counts is stored in the storage apparatus 120 in association with a learner identifier to identify the learner. It is noted above that the storage of learning results in the storage apparatus 120 can be done in various manners. In FIG. 2, the transmissions from the first and second learner terminals to the storage apparatus 120 are each represented by one arrow, but multiple learning takes place. Although the description has focused on the first learner terminal 111, the first and second learner terminals are illustrated separately in FIG. 2. As with the first learner terminal 111, the learning contents are transmitted to the second learner terminal 112 (S204), and the storage apparatus 120 receives inputs regarding the learning contents from the second learner terminal 112 (S205).

Next, the supporting apparatus 100 sends a record acquisition request to the storage apparatus 120 to acquire records of learning results by multiple learners (S206) and receives the records from the storage apparatus 120 (S207). Although the description here assumes that records are received from the storage apparatus 120 by for example calling an API, by outputting the records stored in the storage apparatus 120 to a file each time a unit period elapses and inputting the file to the supporting apparatus 100, the supporting apparatus 100 can acquire the records.

Table 1 shows an example of the learning result data stored in the supporting apparatus.

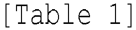

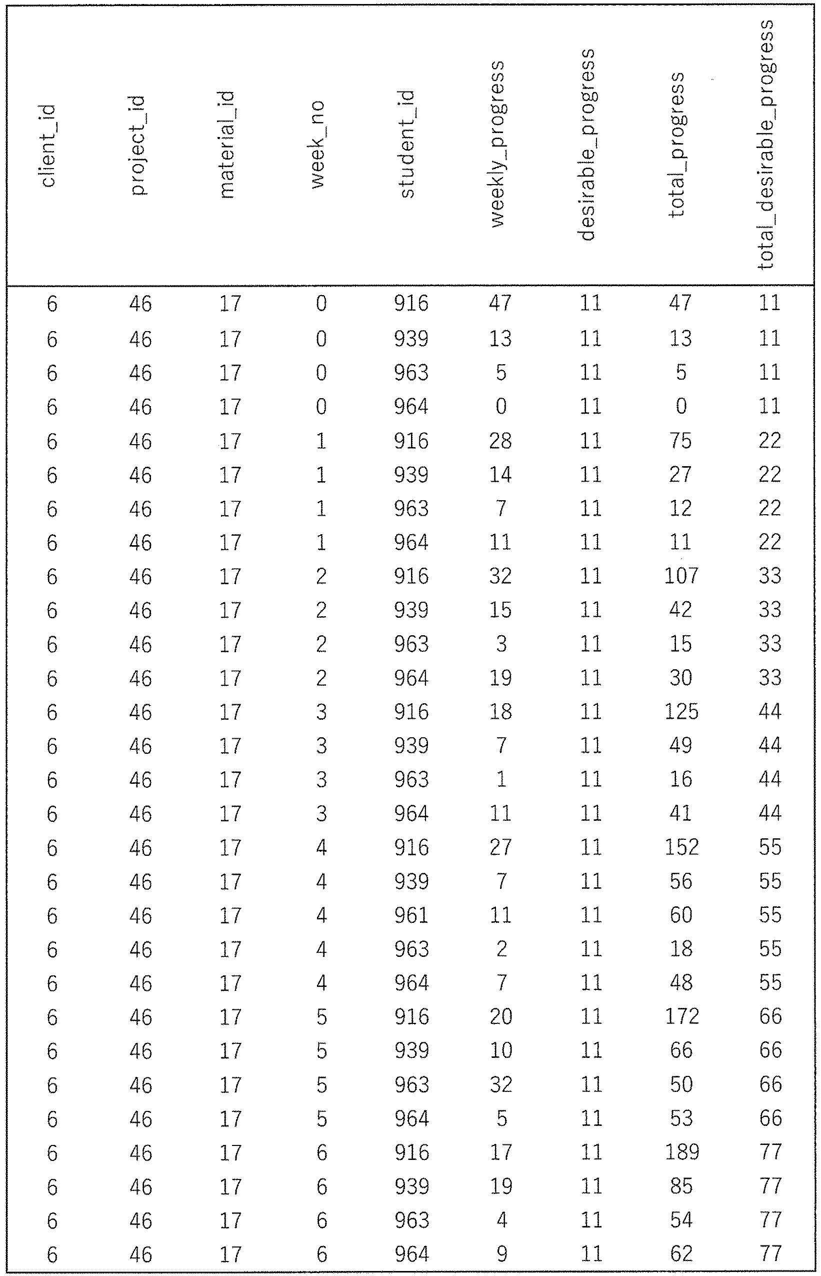

In the data in Table 1, the elapsed unit period is represented by "week_no" and the value of the first week is "0." The identifier of each learner is represented by "student_id," the learning result for each unit period is represented by "weekly_progress," the goal for that period is represented by "desirable_progress," the cumulative value of the learning results up to that period is represented by "total_progress," and the cumulative value of the goals up to that period is represented by "total_desirable_progress." In addition, the learning material is indicated by "material_id." Table 1 also shows that the four learners identified by the learner identifiers "student_id" of "916", "939", "963", and "964" are employees of the client whose client identifier "client_id" for the support service provided by the supporting apparatus 100 is "6" and the table also shows that an example where learning was conducted as a training project to the employees, the identifier "project_id" of the project being "46."

Based on the records obtained, the supporting apparatus 100 calculates, for each learner, the rate of progress against the cumulative value of values of the goals per unit period, as predetermined by the goal setting information. The apparatus 100 then determines the type of support for each actor according to which of a set of ranges the rate of progress falls within, including a first range including 100%, a second range less than or less than or equal to the first range, and a third range greater than or greater than or equal to the first range (S208).

Here, the rate of progress can be divided into the following segments, for example
0%
1% to 70%
71% to 90%
91% to 110%
111% to 150%
151% or more
Relative to the range of 91% to 110%, including 100%, the range is divided into a first range below it and a third range above it and the range may be further divided into smaller segments. The example above shows a division into six segments. For example, the second range could be 71% to 90%, and 1% to 70% that is below it could be the fourth range. Rounding up to the nearest 1% would have the advantage of strictly distinguishing between 0% and above, and would allow us to know whether a person has crossed the psychological barrier and initiated action, but a different fractional treatment could be employed. If necessary, a fourth range of 0% to 70% below the second range could be used without distinguishing 0%. The rate of progress is primarily calculated against the cumulative value of the goals per unit period, as described above, but may also be calculated for each unit period against the set value of the goal per unit period, as described below.

Although not shown in FIG. 2, the calculated progress rate should be viewable on the learner terminal 111. The progress rate can be viewed by sending viewing screen display information for displaying the screen for viewing the progress rate to the learner terminal 111 as an HTML format file, for example, and displaying the progress rate of the learner on the display screen of the learner terminal 110 in a web browser, or by running an application installed on the learner terminal 110 to display the progress rate in the application.

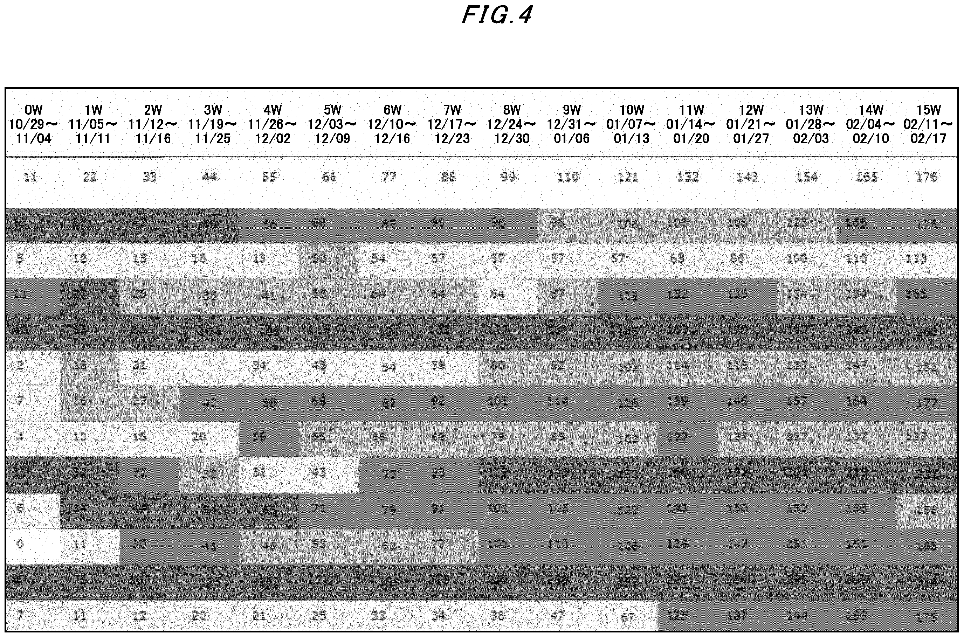

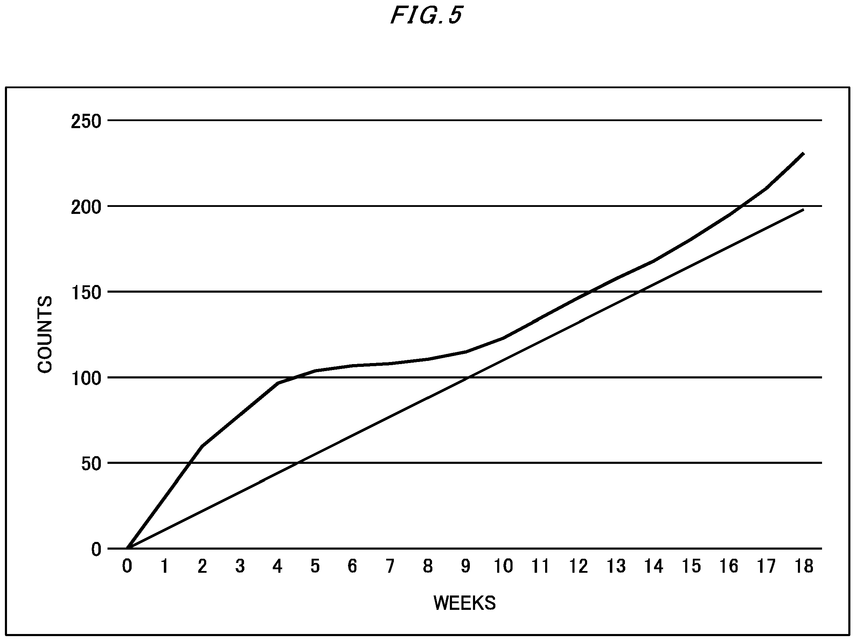

The inventors have accumulated a large amount of data on the relationship between the support provided to learners on a trial basis and their eventual goal achievement, and have found that in order to achieve a goal for a given period of time, achieving a high rate of progress in the initial period of that given period has a significant impact on subsequent continued learning. FIG. 4 shows examples of learners' progress transitions when various types of support were provided, and FIG. 5 shows an example of the subsequent learning progress of a learner who achieved a high rate of progress in the initial period. It shows how the degree of learning in the initial period affects the subsequent progress more than the learning counts accumulated linearly toward the goal for a given period of time. To express this quantitatively, if the predetermined period is divided by unit time and the rate of progress toward the cumulative value of the goals per unit time is around 100% at the initial period of the predetermined period, or more preferably, it can be said that a high rate of progress is likely to continue thereafter.

In FIG. 4, the progress rate is divided into four segments: 0% to 70% (rounded up to the nearest 1%; the same applies below in FIG. 4), 71% to 90%, 91% to 110%, and 111% and above. Darker colors represent higher progress rates. Calling 91% to 110% including 100% the first range, 71% to 90% below the first range the second range, 111% and above above the first range the third range, and 0% to 70% below the second range the fourth range, the learner whose learning result of the first week is "47" falls in the third range and the high rate of progress is maintained. Although the learner whose result of the first week is "0" falls within the fourth range, and the learning result of the following week is also low with "11", which falls within the fourth range, the result of the following week is "30", which falls within the first range with a progress rate of over 91%. This learner's progress rate never exceeded the first range, but the learner has maintained a relatively high progress rate since then. The learner whose result for the first week is "13" falls within the third range, and his progress rate remains high until four weeks have passed. However, the learning result of the fifth week is "56" and the progress rate drops to 102% which is within the first range. The progress rate further decreases in the tenth week after nine weeks had passed, but the progress rate recovers to the first range after fifteenth week and the rate of progress is maintained at a relatively high level throughout the entire study period. For the learner with a learning result of "5" in the first week, the progress rate of the week falls in the fourth range and the subsequent learning results remain low. In the sixth week after five weeks had passed, the learning result slightly improves to "50", but the learning situation has been sluggish again since then. In FIG. 4, for the sake of brevity, 0% is included in the fourth range without distinction, but if this is to be distinguished, the fourth range should be 1% to 70% as the fifth range.

It can be said that learners who achieve a high progress rate early on tend to continue learning autonomously. As an example, for such a first learner's first learner terminal 111, it is sufficient to send a message based on a prepared template from the supporting apparatus 100 or to make a request to the mail server (S209). More specifically, a message based on the template may be automatically sent when the progress rate falls within the third range in the initial period, where the initial period is four or fewer units of time within a predetermined period. This reduces the load on the supporters and increases the number of learners that can be handled per person. Here, we have described four units or less as an initial period, but depending on the learning content of the support target, three units or less may be considered as an initial unit, or five or 6 units may be considered as the initial period. The same support may be provided when the rate of progress against the goal per unit period set in advance falls within the third range for two or three consecutive units in the initial period within the predetermined period. The server that transmits the messages may be a separate server from the servers that perform the other functions described herein, or since the apparatus 100 may include multiple servers, the server may be viewed as falling under the apparatus 100.

Although it was described that support is provided by automatic message transmission when the progress rate falls within the third range in the initial period of the predetermined period, depending on the learning to be supported, support may be provided by automatic message transmission even when the progress rate falls within the first range. In this case, it is possible to sufficiently motivate learners whose progress rate falls within the first range and lead them to a higher progress rate by appropriately selecting a message template as necessary. Such messages can, for example, be in image or video format rather than text format. A text-only text format may be difficult to read, and an image or video containing text can increase the effectiveness of the message. Although the case where the rate of progress in the initial period falls within the first range is described here, the image or video format can be used in other cases as appropriate to increase the effectiveness of the message and provide support without increasing the burden on the supporter. In addition to image and video formats, the message may also be in audio format. Although the above description assumes that the supporting apparatus 100 automatically sends a message or makes a request to the mail server, it may be possible to display an input screen for executing the transmission or request on the supporter's terminal 130, and to make the transmission or request in response to an input made by the supporter to the input screen. The transmission or request may be made in response to input made by the supporter to the input screen. The same support may also be provided when the rate of progress is calculated against the set value of a goal per unit period.

If the high rate of progress is not achieved at an early stage, it is desirable for the supporter to provide active support to motivate learning and increase the rate of progress to the first range, or more preferably to the third range above it. As an example, for such a second learner, the supporting apparatus 100 first notifies the supporter terminal 130 of the need for active support (S210), and the supporter using the supporter terminal 130 provides intervention to the second learner in response to the notification (S211). As an intervention, telephone follow-up, i.e., calling the second learner over the phone, is effective. More specifically, the notification can be automatically sent if the progress rate corresponds to 0% when the number of unit times within a predetermined time period is 2 or less. Although two units are used here as an example, one or three units or less may be used as the period of active support through intervention, depending on the learning to be supported. In the example in FIG. 4, the supporter provided a telephone follow-up intervention to a learner with a learning result of "0" in the first week to motivate the learner to learn and increased the rate of progress in the initial period to the first range. Also, when the rate of progress is calculated against the set value of a goal per unit period, the need for active support described above may be notified when the rate of progress is 0% in at least one of the unit periods after one, two or three units have elapsed within the predetermined period.

It is preferable to send a message based on a prepared template from the supporting apparatus 100 or a request thereof to the mail server in response to the fact that a learner with a progress rate of 0% has taken a learning action and a learning result has occurred. Sending a so-called complimentary message, which is a positive evaluation of the initiation of an action, can increase the motivation to learn, and is particularly effective in the initial period. The message may be sent by first notifying the supporter terminal 130 from the supporting apparatus 100, and then making a request for transmission from the supporter terminal 130 to a message transmission server such as a mail server. The message may be in image, video or audio format. The same message transmission may be performed when the rate of progress is calculated against a set value of goal per unit period.

Although it was described that support by intervention is provided when the rate of progress corresponds to the 0% range in the initial period of a predetermined period, depending on the learning to be supported, support by intervention may also be provided when the rate of progress falls into the fourth range. The fourth range is further below the second range, which is below the first range including 100%. This is because the number of learners whose progress rate falls within the fourth range can be appropriately limited and the load on the supporter will not be increased excessively. Similar support may be provided when the rate of progress is calculated against the set value of a goal per unit period.

If the cumulative value of learning results does not change, even if the rate of progress in the first range or higher is realized at the initial period of a predetermined period, or more broadly, if the goal per unit period is not achieved, the risk of disengagement from learning is increased. It is the inventors' view that a supporter intervention to provide active support is preferred especially when the cumulative value of learning results has not changed, or more broadly, when the goal per unit period has not been achieved for two consecutive units because the risk of disengagement is high. Intervention includes the sending of a message by the supporter in response to a notification from the apparatus 100 to the supporter terminal 130. Sending a message generated by the supporter in light of the learner's situation, rather than an automatic transmission by the apparatus 100, is an effective intervention. In the case where the rate of progress is calculated against the set value of a goal per unit period, the same active support may be provided when the goal has not been achieved for two consecutive units within a predetermined period or when the rate of progress falls within a second range.

For learners who were able to increase their progress rate to the first range or higher third range at the initial period of the predetermined period, it is preferable to allow them to join the community service for learning service users used by such learners. If learners with relatively high progress rates can be connected, so to speak, to the community, they will be motivated by communication among learners and will be more likely to continue their own learning behavior. Here, learners participating in the community service may feel resistance to initiating communication in the community service if they are not involved with other learners, and such resistance can be mitigated by forming a team including multiple learners. More specifically, the apparatus 100 may generate a team by selecting a plurality of learners who meet predetermined selection criteria, such as learning initiation period and progress rate. The selection criteria can be stored in a storage unit 103 or a storage apparatus or storage medium, such as a database 104 accessible from the apparatus 100 via an IP network. An example of the selection criteria is that the progress rate at a given point in time falls within the first range or the third range above it among learners who study during the same predetermined period. As an example, the progress rate can be calculated as a team that includes the learner using the learner terminal 111, and by sending viewing screen display information from the apparatus 100 to the learner terminal 111 for displaying a screen for viewing the progress rate together with the progress rates of other teams, participation in the community service can be encouraged. In the case where the rate of progress is calculated against the set value of a goal per unit period, a plurality of learners may be selected based on a plurality of rates of progress per unit period prior to, or prior to or corresponding to, a given point in time.

As described above, the present invention makes it possible for a single supporter to respond to dozens or hundreds of actors by efficiently selecting those who should be intervened by the supporter using his/her time. This enables the provision of a wide range of effective support for habituation of behavior, which until now has only been available to a limited number of people. From the perspective of companies that provide services such as learning services and fitness services, the benefit of making such support available to users are significant because it increases the likelihood that service users will continue to act and thus continue to use the services, leading to lower churn rates.

In the above embodiments, it is to be noted that if the term "only" is not written, such as in "based only on x", "in response to x only", or "in the case of x only", in the present Specification, it is assumed that additional information may also be taken into account. Also, as an example, it is to be noted that a description "b is performed in the case of a" does not necessarily mean "b is always performed in the case of a" or "a is performed immediately after a" except where expressly stated. Also, a description "each a which is part of A" does not necessarily mean that A comprises a plurality of elements and it includes a case where A is composed of a single element.

In addition, as a caveat, even if there are aspects of a method, a program, a terminal, an apparatus, a server or a system (hereinafter referred to as "method, etc.") that perform operations different from those described herein, each aspect of the invention is intended to perform the same operation as one of the operations described herein, and the existence of an operation different from those described herein does not mean that the method, etc. is outside the scope of each aspect of the invention.

### REFERENCE LIST

100 Supporting apparatus
101 Communication unit
102 Processing unit
103 Storage unit
104 Database
111 First learner terminal
112 Second learner terminal
120 Storage apparatus
130 Supporter terminal
300 Goal setting information input screen

## Claims

1. A method for supporting a continuous action within a predetermined period of time, comprising:
the computer acquiring records from a storage apparatus storing results of actions by multiple actors;
the computer, based on the records, for each actor, calculating a progress rate against a cumulative value of values of goals per unit period that divides the predetermined period, wherein the cumulative value is a value up to a unit period in which the records were acquired;
the computer, for each actor, determining a type of support depending on which range within a set of ranges the progress rate falls in, wherein the set of ranges include a first range including 100%, a second range less than, or less than or equal to the first range, and a third range greater than, or greater than or equal to the first range.

2. The method according to claim 1, wherein the predetermined period is any one of 3 months, 4 months, 5 months, 6 months, 8 weeks, 16 weeks, 18 weeks and 20 weeks.

3. The method according to claim 1, wherein the set of ranges includes a fourth range that is 0% or more or 1% or more and less than, or less than or equal to the second range.

4. The method according to claim 3, further comprising a step of determining call as support for an actor whose progress rate is in the fourth range after 1 unit, 2 units, or 3 units of the unit period of the predetermined period has elapsed to notify a result of the determination to a supporter terminal used by a supporter who performs support.

5. The method according to claim 1, further comprising a step of determining message transmission as support for an actor who has not achieved the goal per unit period continuously for 2 units within the predetermined period and whose progress rate falls within the third range to notify a result of the determination to a supporter terminal used by a supporter who performs support.

6. The method according to claim 1, wherein the support determined for an actor whose progress rate falls within the third range is message transmission based on a prepared template.

7. The method according to any one of claims 1 to 6, further comprising a step of receiving goal setting information for setting a goal for each unit period within the predetermined period from a supporter terminal used by a supporter who performs support.

8. The method according to any one of claims 1 to 7, further comprising a step of generating a team including multiple actors who meet a predetermined selection criterion.

9. A program for causing a computer to perform a method for supporting a continuous action within a predetermined period of time, the method comprising:
the computer acquiring records from a storage apparatus storing results of actions by multiple actors;
the computer, based on the records, for each actor, calculating a progress rate against a cumulative value of values of goal per unit period that divides the predetermined period, wherein the cumulative value is a value up to a unit period in which the records were acquired;
the computer, for each actor, determining a type of support depending on which range within a set of ranges the progress rate falls in, wherein the set of ranges include a first range including 100%, a second range less than, or less than or equal to the first range, and a third range greater than, or greater than or equal to the first range.

10. An apparatus for supporting a continuous action within a predetermined period of time, configured to:
acquire records from a storage apparatus storing results of actions by multiple actors;
based on the records, for each actor, calculate a progress rate against a cumulative value of values of goal per unit period that divides the predetermined period, wherein the cumulative value is a value up to a unit period in which the records were acquired;
for each actor, determine a type of support depending on which range within a set of ranges the progress rate falls in, wherein the set of ranges include a first range including 100%, a second range less than, or less than or equal to the first range, and a third range greater than, or greater than or equal to the first range.
